# EUROPEAN PATENT SPECIFICATION

(11) **EP 1 386 296 B1**
(45) Date of publication and mention of the grant of the patent: **29.06.2016**
(21) Application number: 01924079.5
(22) Date of filing: 24.04.2001
(51) Int. Cl.: G06Q 20/38, G06Q 20/22, G06Q 20/06, G06Q 20/02

(54) **METHOD FOR SECURE PAYMENT WITH MICROPAYMENT CAPABILITIES**
VERFAHREN ZUR SICHEREN BEZAHLUNG EINSCHLIESSLICH DER MÖGLICHKEIT ZUR ZAHLUNG VON KLEINSTBETRÄGEN
PROCEDE DE PAIEMENT SECURISE A CAPACITES DE MICROPAIEMENT

(43) Date of publication of application: 04.02.2004
(73) Proprietor: milliPay Systems AG, 8052 Zürich (CH)
(72) Inventor: Hruz, Tomas, 8134 Adliswil (CH); Botka, Vladimir, 85101 Bratislava (SK); Stary, Jan, 93101 Samorin (SK)
(74) Representative: Rentsch Partner AG
(86) International application number: PCT/SK2001/000011
(87) International publication number: WO 2002/086830

(56) References cited:
- LEI TANG: "A set of protocols for micropayments in distributed systems" PROCEEDINGS OF THE FIRST USENIX WORKSHOP OF ELECTRONIC COMMERCE, PROCEEDINGS OF THE FIRST USENIX WORKSHOP OF ELECTRONIC COMMERCE, NEW YORK, NY, USA, 11-12 JULY 1995, 11 - 12 July 1995, pages 107-115, XP000579444 1995, Berkeley, CA, USA, USENIX Assoc, USA
- XIAOLING DAI, BRUCE W. N. LO: "Netpay -- An Efficient Protocol for Micropayments On The WWW" PROCEEDINGS OF THE 5TH AUSTRALIAN WORLD WIDE WEB CONFERENCE, AUSWEB'99, [Online] 17 - 20 April 1999, pages 1-6, XP002183851 NSW, AU Retrieved from the Internet: <URL:http://ausweb.scu.edu.au/aw99/papers/ index.html> [retrieved on 2001-11-20]
- ZHAO J ET AL: "Yet another simple Internet electronic payment system" MOBILE COMMUNICATIONS, TECHNOLOGY, TOOLS, APPLICATIONS, AUTHENTICATION AND SECURITY. PROCEEDINGS OF THE IFIP 1996 WORLD CONFERENCE ON MOBILE COMMUNICATIONS, 2 - 6 September 1996, pages 1-8, XP002183852 Canberra, AU
- DOMINGO-FERRER J ET AL: "Spending programs: a tool for flexible micropayments" INFORMATION SECURITY. SECOND INTERNATIONAL WORKSHOP, ISW'99. PROCEEDINGS (LECTURE NOTES IN COMPUTER SCIENCE VOL.1729), INFORMATION SECURITY. SECOND INTERNATIONAL WORKSHOP, ISW'99. PROCEEDINGS, KUALA LUMPUR, MALAYSIA, 6-7 NOV. 1999, pages 1-13, XP002183853 1999, Berlin, Germany, Springer-Verlag, Germany ISBN: 3-540-66695-8
- JACQUES STERN, SERGE VAUDENAY: "SVP: A Flexible Micropayment Scheme" ECOLE NORMALE SUPERIEURE, TECHNICAL REPORT, CNRS URA 1327, [Online] March 1997 (1997-03), pages 1-12, XP002183854 FR Retrieved from the Internet: <URL:http://fermivista.math.jussieu.fr/htt p/www.dmi.ens.fr.html> [retrieved on 2001-11-21]
- ELLIS CHI: "Evaluation of Micropayment Schemes" HEWLETT_PACKARD TECHNICAL REPORT, HPL-97-14, [Online] 13 January 1997 (1997-01-13), pages 1-29, XP002183855 USA Retrieved from the Internet: <URL:http://www.hpl.hp.com/techreports> [retrieved on 2001-11-21]

## Description

### Field of the Invention

This invention relates to communication network payment schemes which are using public key cryptography and cryptographically secure hash functions for efficient design. In particular, the present invention relates to the field of micropayment technology. The invention can be applied in Internet e-commerce.

### Background of the Invention

Internet economy is recently suffering from large imbalances. There is a high quality software distributed for free, there are flat prices for Internet providing and there is an unsolicited advertisement linked to the most of the valuable content.

Possible solution to those problems is lying in a payment system, which should encompass most of the Internet complexity. Notably it must have the following features.
1. The payment granularity must range from 10⁻⁶ to 10² USD and possibly should be dynamic as well.
2. The transaction cost of one payment must be cheaper then the payment itself.
3. The payment method must be secure.
4. The payment system must be easily applied to all Internet services including the future ones. In particular, it must be able to handle video and other multimedia data streams as well as the telecommunication data streams.

We present an efficient solution which has the features mentioned above. In our work we use an idea of payment chain introduced in [1]. However, we use this concept in a novel way to construct a new payment schemes which are the subject of the present invention.

Our solution differs from the previous ones (like [1] or [2]) in a crucial conceptual aspect that it is *strongly* debit oriented avoiding troubles with fraud and double-spending. The solution proposed in [1] is credit oriented. In [2] the authors describe hybrid micropayment system.

Contrary to the other solutions which provide approximate or hybrid payments, the presented invention provides an accurate (on line) accounting double entry method where each of the agents immediately know the actual state of their account balance and there is no financial credit involved.

We present a method for debit oriented payment schemes allowing fast and simple small payments over the Internet. On the other hand, the method flexibility per transaction is also capable to handle macropayments without any changes as well.

At least three agents are involved in the payment operation. There is a *vendor* who wants to sell any kind of information or goods over the communication network and a *customer* who is willing to pay for the content. The *broker* is keeping the accounts for *vendors* and *customers* and mediates the payments.

In the present invention we understand the notion of an agent in a general way i.e. the agent can be a complex network itself using the same principles of payment data communication as are defined in this invention.

The invention corresponds to the subject matter of claim 1.

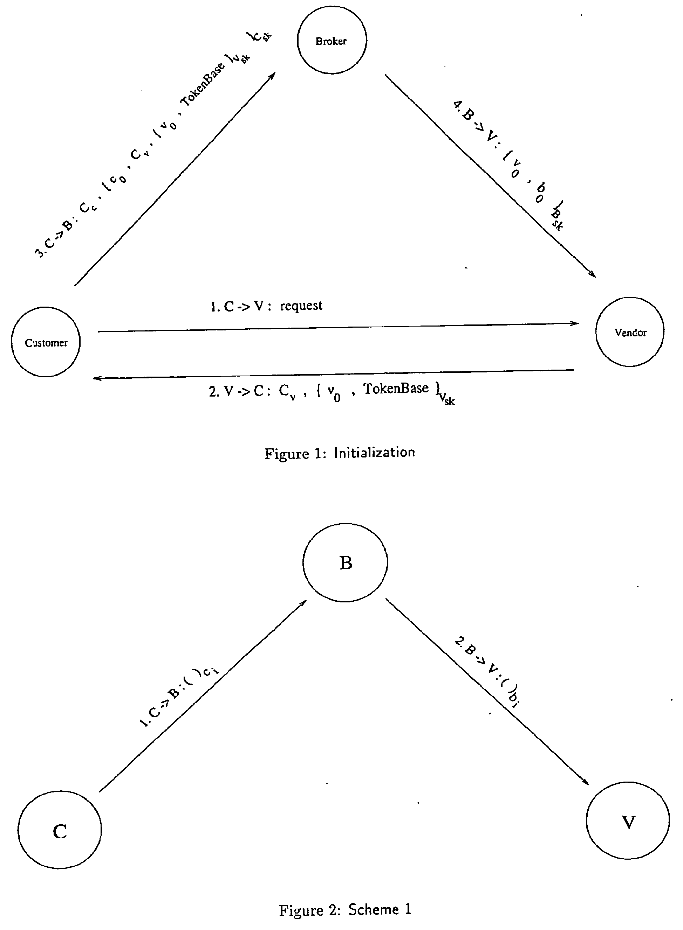

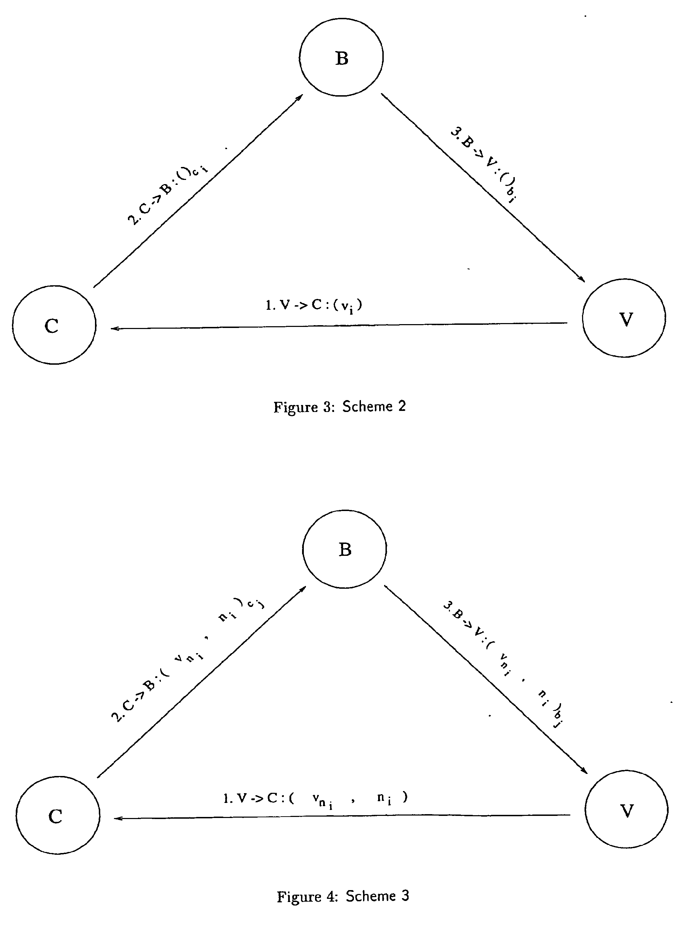

Specifically, the claimed invention corresponds to "Scheme 3" (illustrated in Figure 4) described later in more detail. The Schemes 1, 2, 4 and 5 (illustrated in Figures 2, 3, 5 and 6) do not correspond to the claimed invention.

### Brief description of the Drawings

The further defined steps of the described methods are schematically shown in the following drawings:
Figure 1 is a schematic diagram of the payment transaction initialization part of the proposed method.
Figure 2 is a schematic diagram of the payment transaction method with the most simple payment information included.
Figure 3 is a schematic diagram of the payment transaction method with a constant cost for each transaction.
Figure 4 is a schematic diagram of the payment transaction method with variable cost for each transaction.
Figure 5 is a schematic diagram of the payment transaction method with variable cost for each transaction and "not to pay" possibility for customer.
Figure 6 is a schematic diagram of the payment transaction method with variable cost for each transaction and "not to pay" possibility for customer, having a circular dataflow pattern.

### Description of the Invention

In the following we shall denote by small letters *u,c,b* cryptographically secure sequence of integers generated in the following way.

To generate a member of the sequence we use cryptographically strong hash function h such as [3] or [4]. We start with randomly selected first member of the sequence υ_{N}. Then we calculate the next members *u*ᵢ₋₁ = *h*(uᵢ), for *i* = *N, N-*1,...*,* 1.

If the function h is one-way and collision-resistant these features are also conveyed to the sequence defined above. The one-wayness means, that it is a hard problem to calculate the members of the chain in opposite direction; *v*ᵢ₊₁ = *h*^{*-*1}(*v*ᵢ), i.e. it is a hard problem to predict the next value in such sequence. The collision-resistance means, that a very large search is needed to find any different inputs *v*ᵢ and *v*ⱼ to produce the same output *h*(*vᵢ*) = *h*(*vⱼ*). This sequence of integers we call a *secure chain.*

We use public-key cryptography (e.g. RSA [5]). The public keys of the *broker* B, *customer.* C and *vendor* V are denoted *Bₚₖ, Cₚₖ* and *Vₚₖ.* Their secret keys are denoted *Bₛₖ, Cₛₖ,* and *Vₛₖ*. For example, a message M with *broker* digital signature produced by secret key *Bₛₖ* is denoted {*M*}*Bₛₖ.* This signature can be verified using the corresponding public key *Bₚₖ*.

With the symbol (*vₙᵢ*, *nᵢ*)*_{cj}* we mean a token where *v_{nᵢ}* is an element of a secure chain *v* as described above, *nᵢ* is the position of *v_{nᵢ}* in the secure chain v starting from *v*₀. *cⱼ* is an element of another secure chain c₁ starting from c₀. During the "session" the chain v is transmitting payment data and the chains c or b are used to authorize (secure) the transmition of the payment data over an insecure channel. In the following we use the terms payment chain for v and authorization chain for b and c.

We suppose that communicating parties certifies each other in a standard way according to the public key cryptography principles. We denote with *C_{C}* the *customer* certificate and with *C_{V}* the vendor certificate.

### TokenBase

With *TokenBase* we denote a data structure which contains financial value, currency of a token and other attributes describing various financial aspects of the payment. For example, the *TokenBase* can be defined as follows

```
 TokenBase = {
                currency_type,
                currency_unit {mantisa, exponent},
                data_unit { type, time, kByte}
               }
```

where:
*TokenBase → currency_type* is the currency of the token.
*TokenBase → currency_unit → mantisa* is the mantissa of the financial value of the token.
*TokenBase → currency_unit → exponent* is the exponent of the financial value of the token.
*TokenBase → data_unit → type* is the type of the payment session.
*TokenBase → data_unit → time* in seconds is the price parameter of the payment session.
*TokenBase → data_unit → kByte* in kBytes is the price parameter of the payment session.

In this example of data structure the *TokenBase → currency_type* and *TokenBase → currency_unit* determines the price and *TokenBase → data_unit* determines the amount of goods (information) for the price already mentioned.

If for example, *currency_type* = *USD , currency_unit*{*mantisa* = *1, exponent* = -2} and *data_unit*{*type* = *any,* time = 1, *kByte* = *any*} then the agent issuing this data structure is submitting an offer to sell or buy a data stream for time of 1 second for the price of 1 cent.

If the value of the token is 1 cent then the data structure *TokenBase → data-unit*{*type,* time, *kByte*} determines the expected behavior of *vendor* and *customer* in the session as follows :
- *data_unit*{*type* = 1, *time* = 1*, kByte* = 0} means that the *customer* is required by the *vendor* to pay 1 cent per 1 second.
- *data*_*unit*{*type* = 1, *time* = 0*, kByte* = 1} means that the *customer* is required by the *vendor* to pay 1 cent per 1 kByte of data.
- *data_unit*{*type* = 2, *time* = *any, kByte* = *any*} means that the *customer* is required to pay 1 cent on the *vendor* request.
- *data_unit{type* = 3,4,5, *time* = *any, kByte* = *any*} means that the value of the token is a multiple of 1 cent and the *customer* is required to pay on the *vendor* request. The multiple is determined as the product of 1 cent and the difference between indices *j* - *i* of the subsequent members *vᵢ* and *vⱼ* of the payment chain originated by the *vendor.*

### Session

We use the notion of session or payment session in the following meaning. The session is a relation among the agents. The session starts with an initialization phase and proceeds with the payment transactions. Each transaction describes a transfer of a particular amount of money.

### Session initialization scheme

Scheme protocol:
1. C *→* V : request
   The initialization of the "session" is started on the C request to V in any detectable form.
2. V *→* C : *Cᵥ,*{*v₀, TokenBase*}*Vₛₖ*
   V calculates the payment chain *v*ᵢ where *i* = *N, N -* 1,...,0 then sends to C her certificate *Cᵥ,* the first member of the V secure chain v₀ and price information *TokenBase*. The values *v₀* and *TokenBase* are signed by the V. The certificate *Cᵥ* does not have to be signed.
3. C → B : *C_{c},*{*c₀,Cᵥ,*{*v₀,TokenBase*}*vₛₖ*}*cₛₖ*
   C calculates the authorization chain *c*ᵢ where *i* = *N,N -* 1,..., 0 then sends to B her certificate *C_{c}*, the first member of the C secure chain *c*₀ and all information she received from V in the previous step. The values received from V and *c*₀ are signed by the C. The certificate *C_{c}* does not have to be signed.
4. B *→* V : {*v*₀, *b*₀}*Bₛₖ*
   B calculates the authorization chain *bᵢ* where *i* = *N,N -* 1,..., 0 then sends to V the first member of the V payment chain *v*₀ and the first member of the B authorization chain *b*₀. The values *v*₀ and *b*₀ are signed by the B.

The length of the authorization chains c and b does not have to be necessarily equal to the length of the payment chain v. If any agent in the session use her authorization chain up to the end, then she must calculate a new one and submit the first member *c*₀ or *b₀* of the chain to the next agent in a secure way using public-key cryptography. It is a responsibility of V that she prepares the payment chain long enough for the whole session. If V use the payment chain up to the end, she must finish the session and start the initialization of new session.

The continuation of the payment session depends on the payment properties expressed in the *TokenBase* items negotiated during the initialization phase. In the following we describe the design of five different payment schemes that comprise payment transactions with different properties.

In the following description of the schemes we use a unified structure. First, we describe scheme protocol, then *broker* money account transfer decisions, scheme properties and application example. In the schemes we denote the financial value of the token as *currency_unit.*

### Scheme 1.

*Customer* is paying fix price per time or data amount. The payment transaction is originated by the *customer.* See Figure 2.

Scheme protocol:
1. C → B : Payment order ()*_{cᵢ}*
   C orders a money transfer by the B.
2. B → V : Payment confirmation ()*_{bᵢ}*
   B confirms the money transfer from C account to the V account.

*Broker* money transfer decisions.
- If *broker* receives from *customer* payment order ()*cᵢ* she transfers to the *vendor* account the amount of money equal to *currency_unit* * (*i* - *j*). Where *j*. is the index of previous member of *customer* authorization chain received by the *broker* from the *customer.*
- Broker confirms payment transfer of amount *currency_unit* * (*i* - *j*) by sending ()*bᵢ* to the *vendor,* where *j* is the index of previous member of *broker* authorization chain sent to the *vendor* by the *broker.*

Scheme properties:
- During the whole session the agents accept from the originator of the secure chain growing index series on submitted members of this secure chain only. Any member of the secure chain received from the originator of this secure chain with an index equal or less than already used is ignored and no action is required to undertake by the receiving agent. It is the responsibility of the agent submitting the secure chain member to obey this rule.
- *customer* can decide to start paying at any moment.
- *broker* can check validity of *cᵢ* according to *c*₀ and subsequent members of the *customer* authorization chain.
- *vendor* can check validity of *bᵢ* according to *b*₀ and subsequent members of the *broker* authorization chain.
- *vendor* expects payment confirmation to start sending data paid by the *customer.*
- The session is running while *customer* is paying.

### Examples: any kind of endless data stream, stock exchange data, press agency news.

### Scheme 2.

*Customer* is paying fix price on the *vendor* requirement. See Figure 3.

Scheme protocol:
1. V → C : Payment request (*vᵢ*)
   V requires a payment by sending the next subsequent member of the payment chain *vᵢ*.
2. C → B : Payment order ()*cᵢ*
   C orders a money transfer by the B.
3. B → V : Payment confirmation ()*bᵢ*
   B confirms the money transfer from C account to the V account.

*Broker* money transfer decisions: the same as in scheme 1.

Scheme properties: the same as in scheme 1.
- Except that *customer* shall wait for *vendor* requirement to start paying.
- In addition customer can check the price versus payment requirement by the *vendor* according to parameters set in the data structure *TokenBase.*

### Examples: video-on-demand, Internet service providing, phone call.

### Scheme 3.

*Customer* is paying variable price on *vendor* requirement. See Figure 4.

Scheme protocol:
1. V → C : Payment request (*vₙᵢ*, *nᵢ*)
   V requires C to pay the amount of *currency_unit* * (*nᵢ* - *n*_{*i*-1})
2. C → B : Payment order (*v_{nᵢ}*,*nᵢ*)*_{cⱼ}*
3. B → V : Payment confirmation (*v_{nᵢ}*,*nᵢ*)*_{bⱼ}*

*Broker* money transfer decisions.
- If *broker* receives from *customer* payment order (*v_{nᵢ}*,*nᵢ*)*_{cⱼ},* she transfers to the *vendor* account the amount of money equal to *currency_unit* * (*nᵢ* - *nᵢ₋₁*). Where *n*_{*i*-1} is the index of previous member of *vendor* payment chain received by the *broker* from the *customer.*
- *vendor* receives from *broker* payment confirmation (*vₙᵢ*,*nᵢ*)*bⱼ,* if *broker* transfers to the *vendor* account the amount of money equal to *currency_unit* * (*nᵢ* - *n*_{*i*-1}). Where *n*_{*i-*1} is the index of previous member of *vendor* payment chain sent to the *vendor* by the *broker.*

Scheme properties: the same as in scheme 1, 2.
- Except that *vendor* can require variable price by sending any member of the payment chain.

### Examples: continuous watching of different TV programs with variable price.

### Scheme 4.

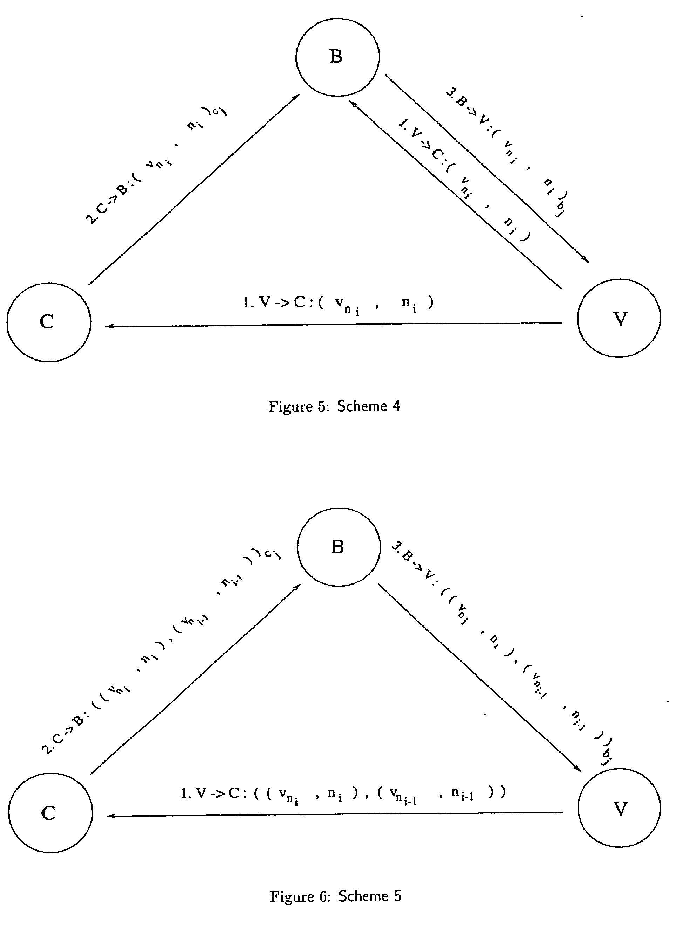

*Customer* is paying variable price on *vendor* requirement. *Customer* can decide the sequence of payment orders. Except the customer also the *broker* receives payment requirements from the *vendor.* See Figure 5.

Scheme protocol:
1. V → C : Payment request (*vₙᵢ*, *nᵢ*)
   V → B : Information about payment request (*vₙᵢ*, *nᵢ*)
2. C → B : Payment order (*vₙᵢ*, *nᵢ*)*cⱼ*
3. B → V : Payment confirmation (*vₙᵢ*, *nᵢ*)*bⱼ*

*Broker* money transfer decisions.
- If *broker* receives from *customer* payment order (*vₙᵢ*, *nᵢ*)*cⱼ* she transfers to the *vendor* account the amount of money equal to *currency_unit* * (*nᵢ* - *n*_{*i*-1}). Where *n*_{*i*-1} is the index of previous member of *vendor* payment chain received by the *broker* from the *vendor.*
- *vendor* receives from *broker* payment confirmation (*vₙᵢ*, *nᵢ*)*bⱼ*, if *broker* transfers to the *vendor* account the amount of money equal to *currency-unit* * (*nᵢ* - *n*_{*i*-1}). Where *n*_{*i*-1} is the index of previous member of *vendor* payment chain sent to the *broker* by the *vendor.*

Scheme properties: the same as in scheme 1, 2, 3.
- Except that *customer* can decide the sequence of payment orders.

This scheme enables the *customer* to accept payment requests in different order as they were received from the *vendor.* This is possible because except the *customer* also the *broker* is given the sequence of payment requirements from *vendor.* In this way *broker* can decide the exact amount of money ordered to transfer by the *customer.*

### Example: Web page content.

### Scheme 5.

*Customer* is paying variable price on *vendor* requirement. *Customer* can decide the sequence of payment orders. *Broker* receives all information about the amount of money ordered to transfer from the *customer*. See Figure 6.

Scheme protocol:
1. V → C : Payment request ((*v_{nᵢ},nᵢ*), (*v*_{*n*_{*i*-1}},*n*_{*i*-1}))
2. C → B : Payment order ((*v_{nᵢ},nᵢ*), (*v*_{*n*_{*i*-1}},*n*_{*i*-1}))*_{cj}*
3. B → V : Payment confirmation ((*v_{nᵢ},nᵢ*), (*v*_{*n*_{*i*-1}},*n*_{*i*-1}))*bⱼ*

*Broker* money transfer decisions.
- If *broker* receives from *customer* payment order (*v_{nᵢ},nᵢ*), (*v*_{*n*_{*i*-1}},*n*_{*i*-1}))*_{cⱼ},* she transfers to the *vendor* account the amount of money equal to *currency_unit* * (*nᵢ* - *n*_{*i*-1}). *Broker* uses these part of the payment chain only if it was not used before in the *customer* payment order.
- *Vendor* receives from *broker* payment confirmation (*v*_{*nᵢ* ,}*nᵢ*) (*v*_{*n*_{*i*-1}},*n*_{*i*-1})*_{bⱼ},* if *broker* transfers to the *vendor* account the amount of money equal to *currency_unit* * (*nᵢ* - *n*_{*i* -1})

This scheme enables the *customer* to accept payment requests in different order as they were received from the *vendor* because in each payment order the *broker* is given both members of the *vendor* payment chain, which determine the amount of money *customer* orders to transfer. In this way *broker* can decide the exact amount of money ordered to transfer by the *customer.* The protocol can be simplified by *vendor* sending only the next member of the payment chain (*v_{nᵢ}*, *nᵢ*).

### Example: the same as 4.

### Security analysis of the schemes 1,2,3

Specifically, for the family of payment schemes already described it is vital that members of the secure chains with lower or equal indexes then already used are considered disclosed and ignored in the protocol messages when encountered.

We consider the scheme secure if the following rules are always valid:
1. *broker* is the trusted authority of the session.
2. *vendor* receives payment confirmation from the *broker* only if her account was increased by the amount confirmed.
3. *customer* account was decreased by the amount ordered only if she sent the payment order to the *broker.*

Generally for the security of the public-key cryptographic protocol is vital that the secret key of the *broker* is known to the *broker* only. Otherwise:
- *customer* or *vendor* can not prove that the *broker* is cheating.
- An attacker can modify the certificates of the *broker* clients. Change client public key, then sign the payment order. (rule 2. not valid)
- An attacker can send payment confirmations to the *vendor*. (rule 1. not valid)

Public keys of the *customer* and the *vendor* are transmitted through the certificates which are signed by the *broker.* If these public keys are published an attacker can observe the protocol traffics, but is not able to brake the rules mentioned above because of the unique relation between:
- *Cᵥ* and {*v*₀,*TokenBase*}*_{Vₛₖ}*
- *C_{C}* and {*c*₀}*_{Cₛₖ}*
- *C_{B}* and {*b*₀}*_{Bₛₖ}*

For schemes 1, 2, 3 no fraud is possible even when transmitted over insecure channel, but an attacker is still able to manipulate the transmitted data and cause session cancelation due to inconsistencies. This could be avoided be using secure channels.

### Security analysis of the schemes 4 and 5

The interception of an attacker to these schemes could cause misunderstanding in the extend of amount and specification for what piece of information the *customer* paid. Because the *customer* can decide to pay for some kind of information later, she can submit members of the payment chain already disclosed. In this case *broker* is not able to prove the origin of the submitted members of the payment chain in the payment order and can not disclose manipulation of the payment order by an attacker. But the *broker* can limit the extend of the damage by not accepting the same range of indexes twice. Anyway the *vendor* can receive money from *customer* which the *customer* did not intend to send. But it is obvious that there is no direct profit in this fraud to the third party. Transmission of this protocol messages between C,B and B,V over a secure channel solves this problem.

### Secure payment matrix

We suppose that *h* and *g* are two commutative cryptographically secure hash functions *hg* = *gh*. One possibility how to construct such function *g* is to compute *g* = *h*ⁱ where *i* is a very large number.

The secure payment matrix is a matrix of hash function values constructed as follows:
1. The value *v_{NN}* is chosen in random.
2. The last column (*v*₀*_{N}, v*₁*_{N},..., v_{NN}*) is constructed by successive application of function *g* to *v_{NN}*
3. The rows are constructed by successive application of function *h* to the elements of the last column e.g. the first row (*v*₀₀, *v*₀₁,...,*v*_{0*N*}) is constructed by successive application of function *h* to *v*_{0*N*}, the second row generation starts from *v*_{1*N*} and so on.

The matrix has a feature that the receiver of the values in the first column can easily verify by applying function *g* that they belong to the first column of the particular secure payment matrix. This construction provides a means for cheap generation of the secure starting values of the payment chains.

### Session replication

It is vital for a micropayment scheme to minimize the number of public key operations as far as they are very expensive compared to the microscopic payment value.

During the session the public key operations occur only in the initialization phase where the shared secret is transmitted. Therefore in the present invention we define the following session replication method.

During the request for an initialization phase the *customer* specifies an uniquely identified previously created session. If other agents agree the shared secret data from the old session are copied and used also for the new session. Further there are two possibilities for the new session.
1. The initialization phase is empty and the payment transactions use the same secure chains as the original session.
2. The initialization phase is using a secure payment matrix defined above and during the initialization phase only the payment chain starting value (*v*_{*i*0}, 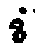 ) is sent from the *vendor* to the *customer* and further to the *broker*. In this case the shared secret is provided by the value *v*₀₀ which is taken from original session.

### References

[1] Ronald L. Rivest et al., "Payword and micromint: Two simple micropayment schemes", Fourth Cambridge Workshop on Security Protocols, Springer Verlag Apr. 1996.
[2] Jarecki et al., "Efficient micropayment system", US Patent No. 5,999,919, Dec. 7, 1999.
[3] Ronald L. Rivest, "The MD5 message-digest algorithm", Internet Request for Comments, April 1992. RFC 1321.
[4] National Institute of Standards and Technology (NIST), "FIPS Publication 180: Secure Hash Standard (SHS)", May 11, 1993.
[5] Rivest et al., "Cryptographic Communication System and Method", US Patent No. 4,405,829, Dec. 7, 1999.

## Claims

1. A method for secure payment via a communication network, the method involving in a payment session three agents, a customer (C), a broker (B) and a vendor (V), the method comprising an initialization phase for starting the payment session and propagating shared secret data, and a continuation phase for proceeding the session and propagating payment transaction tokens, the initialization phase comprises:
transmitting from the vendor (V) to the customer (C), responsive to a request from the customer (C), a first message including a certificate Cᵥ of the vendor (V), the first element v₀ of a payment chain v and price information, the payment chain v being a secure chain calculated by the vendor (V) as a secure sequence of integers using a cryptographically strong hash function and a randomly selected first member, and the price information and the first element v₀ being signed by the vendor (V) with a secret key Vₛₖ of the vendor (V), verifiably with a corresponding public key Vₚₖ of the vendor (V);
transmitting from the customer (C) to the broker (B) a second message in-cluding a certificate C_{c} of the customer (C), the first element c₀ of a customer authorization chain c, the customer authorization chain c being a secure chain calculated by the customer (C) as a secure sequence of integers using a cryptographically strong hash function and a randomly selected first member, and the first message, the first element c₀ and the first message being signed by the customer (C) with a secret key Cₛₖ of the customer (C), verifiably with a corresponding public key Cₚₖ of the customer (C); and
transmitting from the broker (B) to the vendor (V) a message including the first element v₀ of the payment chain v, and the first element b₀ of a broker authorization chain b, the broker authorization chain b being a secure chain calculated by the broker (B) as a secure sequence of integers using a cryptographically strong hash function and a randomly selected first member, and the first element v₀ of the payment chain v and the first element b₀ of the broker authorization chain b being signed by the broker (B) with a secret key Bₛₖ of the broker (B), verifiably with a corresponding public key Bₚₖ of the broker (B);
and wherein the continuation phase comprises:
transmitting from the vendor (V) to the customer (C) a payment request token including an element vₙᵢ of the payment chain v, and an index nᵢ indicating the position of the element vₙᵢ in the payment chain v;
transmitting from the customer (C) to the broker (B) a payment order token including the element vₙᵢ of the payment chain v and the index nᵢ received from the vendor (V), and an element cⱼ of the customer authorization chain c; and
transferring by the broker (B) a payment amount to an account of the vendor (V), responsive to receiving the payment order token from the customer (C), the payment amount being determined by a multiplication of a currency unit with a difference between the index nᵢ received from the vendor (V) in the payment order token and an index nᵢ₋₁ of an element vₙᵢ₋₁ of the payment chain v received previously by the broker (B) from the customer (C),
transmitting from the broker (B) to the vendor (V) a payment confirmation token including the element vₙᵢ of the payment chain v and the index nᵢ received from the customer (C), and an element bⱼ of the broker authorization chain b; and
the vendor (V) sending data paid by the customer (C), upon receiving the payment confirmation token.

## Patentansprüche

1. Verfahren zur sicheren Bezahlung über ein Kommunikationsnetzwerk, wobei das Verfahren drei Vermittler in eine Zahlungssitzung mit einbezieht, einen Kunden (C), einen Broker (B) und einen Verkäufer (V), wobei das Verfahren eine Initialisierungsphase, um die Zahlungssitzung zu starten und gemeinsame, geheime Daten zu verteilen, und eine Kontinuitätsphase, um die Sitzung fortzusetzen und Wertmarken (tokens) für eine Zahlungstransaktion zu verteilen, umfasst, wobei die Initialisierungsphase umfasst:
als Reaktion auf eine Anfrage von dem Kunden (C) Übertragen von dem Verkäufer (V) an den Kunden (C) einer ersten Nachricht, die ein Zertifikat Cᵥ des Verkäufers (V), das erste Element v₀ einer Zahlungskette v und Preisinformationen enthält, wobei die Zahlungskette v eine sichere Kette ist, die von dem Verkäufer (V) als eine sichere Folge ganzer Zahlen unter Verwendung einer kryptographisch strengen Hashfunktion (Streuwertfunktion) und eines zufällig ausgewählten ersten Elements berechnet wird, und wobei die Preisinformationen und das erste Element v₀ von dem Verkäufer (V) mit einem geheimen Schlüssel Vₛₖ des Verkäufers (V) und nachprüfbar mit einem entsprechenden öffentlichen Schlüssel Vₚₖ des Verkäufers (V) unterzeichnet werden;
Übertragen von dem Kunden (C) an den Broker (B) einer zweiten Nachricht, die ein Zertifikat C_{c} des Kunden (C) und das erste Element c₀ einer Kundenautorisierungskette c enthält, wobei die Kundenautorisierungskette c eine sichere Kette ist, die von dem Kunden (C) als eine sichere Folge ganzer Zahlen unter Verwendung einer kryptographisch strengen Hashfunktion und eines zufällig ausgewählten ersten Elements berechnet wird, und wobei die erste Nachricht, das erste Element c₀ und die erste Nachricht von dem Kunden (C) mit einem geheimen Schlüssel Cₛₖ des Kunden (C) und nachprüfbar mit einem entsprechenden öffentlichen Schlüssel Cₚₖ des Kunden (C) unterzeichnet werden; und
Übertragen von dem Broker (B) an den Verkäufer (V) einer Nachricht, die das erste Element v₀ der Zahlungskette v und das erste Element b₀ einer Brokerautorisierungskette b enthält, wobei die Brokerautorisierungskette b eine sichere Kette ist, die von dem Broker (B) als eine sichere Folge ganzer Zahlen unter Verwendung einer kryptographisch strengen Hashfunktion und eines zufällig ausgewählten ersten Elements berechnet wird, und wobei das erste Element v₀ der Zahlungskette v und das erste Element b₀ der Brokerautorisierungskette b von dem Broker (B) mit einem geheimen Schlüssel Bₛₖ des Brokers (B) und nachprüfbar mit einem entsprechenden öffentlichen Schlüssel Bₚₖ des Brokers (B) unterzeichnet werden;
und wobei die Kontinuitätsphase umfasst:
Übertragen von dem Verkäufer (V) an den Kunden (C) einer Wertmarke einer Zahlungsanfrage, die ein Element vₙᵢ der Zahlungskette v und einen Index nᵢ enthält, der die Position des Elements vₙᵢ in der Zahlungskette v angibt.
Übertragen von dem Kunden (C) an den Broker (B) einer Wertmarke einer Zahlungsanweisung, die das Element vₙᵢ der Zahlungskette v und den Index nᵢ, der von dem Verkäufer (V) empfangen wird, und ein Element cᵢ der Kundenautorisierungskette c enthält; und
als Reaktion auf einen Empfang der Wertmarke der Zahlungsanweisung von dem Kunden (C) Übertragen von dem Broker (B) eines Zahlungsbetrags an ein Konto des Verkäufers (V), wobei der Zahlungsbetrag durch eine Multiplikation einer Währungseinheit mit einer Differenz zwischen dem Index nᵢ, der von dem Verkäufer (V) mit der Wertmarke der Zahlungsanweisung empfangen wird, und einem Index nᵢ₋₁ eines Elements vₙᵢ₋₁ der Zahlungskette v, der vorher durch den Broker (B) von dem Kunden (C) empfangen wird, bestimmt wird,
Übertragen von dem Broker (B) an den Verkäufer (V) einer Wertmarke der Zahlungsbestätigung, die das Element vₙᵢ der Zahlungskette v und den Index nᵢ, der von dem Kunden (C) empfangen wird, und ein Element bᵢ der Brokerautorisierungskette b enthält; und
wobei der Verkäufer (V) Daten, die von dem Kunden (C) bezahlt werden, beim Empfang der Wertmarke der Zahlungsbestätigung sendet.

## Revendications

1. Procédé de paiement sécurisé via un réseau de communication, le procédé mettant en jeu, dans une session de paiement, trois agents, un consommateur (C), un courtier (B) et un vendeur (V), le procédé comprenant une phase d'initialisation pour démarrer la session de paiement et propager des données secrètes partagées, et une phase de continuation pour poursuivre la session et propager des jetons de transaction de paiement, la phase d'initialisation comprenant :
la transmission du vendeur (V) au consommateur (C), répondant à une requête envoyée par le consommateur (C), d'un premier message contenant un certificat Cᵥ du vendeur (V), le premier élément v₀ d'une chaîne de paiement v et une information de prix, la chaîne de paiement v étant une chaîne sécurisée calculée par le vendeur (V) sous la forme d'une séquence sécurisée de nombres entiers utilisant une fonction de hachage cryptographiquement forte et un premier élément choisi au hasard, et l'information de prix et le premier élément v₀ étant signés par le vendeur (V) avec une clé secrète Vₛₖ du vendeur (V), de manière vérifiable avec une clé publique correspondante Vₚₖ du vendeur (V) ;
la transmission du consommateur (C) au courtier (B) d'un deuxième message contenant un certificat C_{c} du consommateur (C), le premier élément c₀ d'une chaîne d'autorisation de consommateur c, la chaîne d'autorisation de consommateur c étant une chaîne sécurisée calculée par le consommateur (C) sous la forme d'une séquence sécurisée d'entiers utilisant une fonction de hachage cryptographiquement forte et un premier élément choisi au hasard, et le premier message, le premier élément c₀ et le premier message étant signés par le consommateur (C) avec une clé secrète Cₛₖ du consommateur (C), de manière vérifiable avec une clé publique correspondante Cₚₖ du consommateur (C) ; et
la transmission du courtier (B) au vendeur (V) d'un message contenant le premier élément v₀ de la chaîne de paiement v, et le premier élément b₀ d'une chaîne d'autorisation de courtier b, la chaîne d'autorisation de courtier b étant une chaîne sécurisée calculée par le courtier (B) sous la forme d'une séquence sécurisée d'entiers utilisant une fonction de hachage cryptographiquement forte et un premier élément choisi au hasard, et le premier élément v₀ de la chaîne de paiement v et le premier élément b₀ de la chaîne d'autorisation de courtier b étant signés par le courtier (B) avec une clé secrète Bₛₖ du courtier (B), de manière vérifiable avec une clé publique correspondante Bₚₖ du courtier (B) ;
et dans lequel la phase de continuation comprend :
la transmission du vendeur (V) au consommateur (C) d'un jeton de requête de paiement comprenant un élément vₙᵢ de la chaîne de paiement v, et un indice ni indiquant la position de l'élément vₙᵢ dans la chaîne de paiement v ; la transmission du consommateur (C) au courtier (B) d'un jeton d'ordre de paiement comprenant l'élément vₙᵢ de la chaîne de paiement v et l'indice ni reçu du vendeur (V), et un élément cᵢ de la chaîne d'autorisation de consommateur c ; et
le transfert par le courtier (B) d'une quantité de paiement à un compte du vendeur (V), en réponse à la réception du jeton d'ordre de paiement provenant du consommateur (C), la quantité de paiement étant déterminée par une multiplication d'une unité de devise par la différence entre l'indice ni reçu du vendeur (V) dans le jeton d'ordre de paiement et un indice nᵢ₋₁ d'un élément vₙᵢ₋₁ de la chaîne de paiement v reçue antérieurement par le courtier (B) depuis le consommateur (C),
la transmission du courtier (B) au vendeur (V) d'un jeton de confirmation de paiement comprenant l'élément vₙᵢ de la chaîne de paiement v et l'indice nᵢ reçu par le consommateur (C), et un élément bᵢ de la chaîne d'autorisation de courtier b ; et
l'envoi par le vendeur (V) de données de paiement effectué par le consommateur (C), suite à la réception du jeton de confirmation de paiement.
